Europäisches Patentamt

European Patent Office

Office européen des brevets

(11) Publication number: **0 056 960**
**B1**

(12) **EUROPEAN PATENT SPECIFICATION**

(45) Date of publication of patent specification: **09.04.86**

(21) Application number: **82100261.5**

(22) Date of filing: **15.01.82**

(51) Int. Cl.⁴: **F 16 B 12/46**

(54) Joint for assembling panels.

(30) Priority: **22.01.81 IT 4400181**

(43) Date of publication of application:
**04.08.82 Bulletin 82/31**

(45) Publication of the grant of the patent:
**09.04.86 Bulletin 86/15**

㊻ Designated Contracting·States:
**AT BE CH DE FR GB LI LU**

(56) References cited:
**BE-A- 562 799**
**CA-A-1 012 731**
**CH-A- 452 145**
**DE-C- 937 614**
**DE-U-1 868 822**
**DE-U-6 922 432**
**FR-A-1 438 951**
**GB-A- 593 321**
**GB-A-1 452 817**
**GB-A-1 481 569**
**GB-A-2 042 670**

(73) Proprietor: **Mulazzani, Giorgio**
**Via Giusti, 6**
**I-61100 Pesaro (IT)**

(72) Inventor: **Mulazzani, Giorgio**
**Via Giusti, 6**
**I-61100 Pesaro (IT)**

(74) Representative: **Modiano, Guido et al**
**MODIANO & ASSOCIATI S.A.S. Via Meravigli, 16**
**I-20123 Milan (IT)**

Courier Press, Leamington Spa, England.

## Description

This invention relates to a joint for assembling panels by engaging together contiguous edges thereof. The invention is useful in the erection of assembly furniture, of partition walls, etc.

According to current practice, such panels are assembled by means of threaded bushings which are embedded in the edge portions of one panel and screws led through the other panel and threaded into said bushings. Instead of the bushings and screws, tie rods may be utilized which are clamped tight by means of cams.

With the above conventional coupling assemblies, the panel assembling and disassembling operations are rather complex. In particular, problems are encountered when a number of panels are to be joined together to extend from one common point. Moreover, conventional approaches leave much to be desired from the aesthetic standpoint.

For assembling panels joints are also known (DE—U—1868822) comprising joining strips associated to the continuous edges of the panels and each formed with two knurled faces enclosing a 90° angle and with a groove extending longitudinally at the apex of said angle.

Assembling of the panels is obtained by means of a locking member having radial ribs introduced into the grooves of adjacent strips. However such a joint is not suitable to interconnect vertical and horizontal panels to form shelves since the load on the horizontal panel would cause disengagement of the locking member from the vertical panel.

The DE—U—6922432 discloses a joint for connecting together two panels wherein the joining strips are provided with a female and male element respectively having dovetail section. The structure of such joint does not permit connection of more than two panels at a common junction point.

Accordingly, the object of the invention is to provide a device which can greatly facilitate such panel assembling and disassembling operations.

According to the invention this object is solved by a device of the kind referred to in the first part of claim 1 comprising the features disclosed in the characterizing portion of claim 1.

Further features of the invention will be apparent from the accompanying drawing, where:

Figure 1 is a plan view of a joint for assembling together three panels arranged in a T-like configuration;

Figure 2 is a perspective view of the joint of Figure 1, with some parts thereof shown expanded and in section to more clearly elucidate some details of the joint; and

Figures 3 and 4 are plan views of a joint for assembling panels arranged in angle and cross configurations.

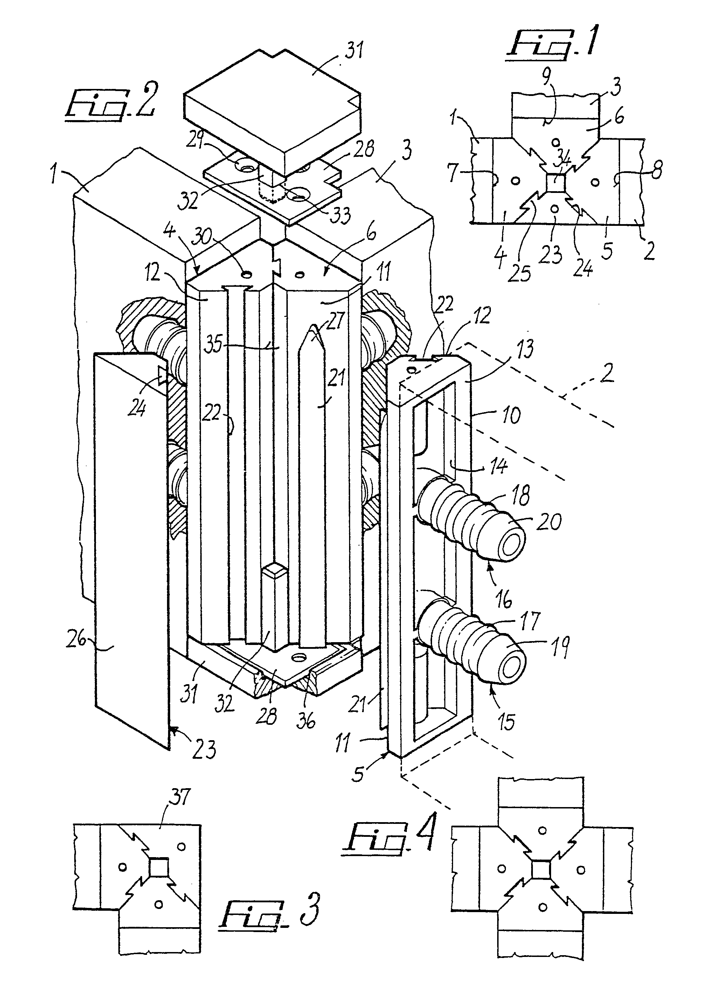

With reference to Figures 1 and 2, the numerals 1, 2, 3 designate three panels to be assembled. The panels 1, 2 are coplanar to each other and perpendicular to the panel 3, such as to result in a T-like configuration.

The panels 1, 2, 3 are assembled together by mutually connecting joining strips 4, 5, 6 which are associated with the front edges or heads 7, 8, 9 of the panels.

The joining strips 4, 5, 6 are perfectly identical and their structure can be best observed in Figure 2. Each strip comprises a body 10 of prismatic shape and having a substantially right-angled triangle cross-section. The faces 11, 12 which include the right angle are identical to each other; in the third face 13 of the body 10, a cavity 14 is formed which serves lightening purposes where the strip is molded from a plastic material. From the chamber 14, there extend, perpendicularly to the face 13, two cylindrical shanks or dowels 15, 16 which are provided with ring-like ribs 17, 18 and conically tapered ends 19, 20. The dowels 15, 16 are intended to be pressure fitted into respective seats in the panels, so that the strip will be caused to abut against its related head.

From the face 11, there protrudes a male element comprising a tenon 21 of dovetail cross-section, which extends longitudinally to the middle of said face. On the face 12, there is instead formed a female element, comprising a groove 22 of dovetail cross-sectional configuration mating that of the tenon.

As may be readily seen in the drawing, the panels are assembled by inserting the tenon of one strip into the groove on an adjacent strip, such that the panels arrange themselves in a T-like arrangement. To close the recess left among the strips 4, 5, 6 and impart more stability to the joint, an auxiliary strip 23 is provided which also has a right-angled triangle cross-sectional configuration, and its mutually perpendicular faces formed with a groove 24, and tenon 25 respectively, which, in the assembled condition, will engage with the tenon 21 and groove 22 of the joining strips on the coplanar panels 1, 2. In this condition, the face 26 of the strip 23 will extend in the same plane as the surfaces of the panels 1, 2.

Advantageously, the tenons 21 have a pointed end 27 to start them into the grooves 22. In order to avoid that, in the assembled condition, the tenons may slide in the grooves, a small plate 28 is provided which has apertures 29 aligned with holes 30 formed in the heads of the strips 4, 5 and 6. Through the apertures 29, screws (not shown in the drawing) are passed which, by engaging in holes 30, clamp the plate 28 against the heads of the joining strips to hold the latter mutually locked. A similar plate 28 may be provided at the opposite end of the joining strips. Such plates are concealed from view by means of covers 31 the shape whereof matches the cross-section resulting from the union of the joining strips to the auxiliary one. The cover 31 is held in the plate covering position by means of a square cross-section shank 32 which is passed through an aperture 33 in the plates 28 and engages into a channel 34 defined by bevels 35 on the strips. The covers 31 have, on their faces toward the plates, a recess 36 adapted to accommodate the plates.

As may be noted in Figures 3 and 4, the joining strips are adapted to unite together two panels in an L-like arrangement or four panels in cruciform arrangement. In the former case, however, a further auxiliary strip 37 is provided which has a right-angled triangle cross-section, the two perpendicular faces being smooth and coplanar with the outer surfaces of the panels and with the third face formed with a tenon and groove for coupling to adjacent strips. The auxiliary strip 37, in addition to defining a corner edge of pleasing appearance, also enhances the mechanical strength of the joint.

In the modification shown in Figure 4, no auxiliary strip is required because the strips are all linked together.

The joint described in the foregoing lends itself also to unite together more than four panels, in which case the angle defined between the faces carrying the male and female elements will be correspondingly smaller.

**Claims**

1. A joint for assembling panels (1, 2, 3) by engaging together contiguous edges (7, 8, 9) thereof, with said edges (7, 8, 9) to be interconnected there being associated joining strips (4, 5, 6) formed each with two converging faces (11, 12) to define a corner edge, on said converging faces (11, 12) there being formed at least one male element (21) and respectively at least one female element (22) being complementary to each other and extending parallel to an edge, characterized in that said male and female elements (21, 22) are of undercut complementary configuration so that, when the panels (1, 2, 3) are connected together, the male element (21) of one panel strip engages in sliding and interlocking relationship the female element (22) of an adjacent panel strip.

2. A joint according to Claim 1, for connecting panels (1, 2, 3) together perpendicularly to each other, characterized in that the converging faces (11, 12) of the joining strips (4, 5, 6) enclose a 90° angle and have one male element (21) and respectively one female element (22) comprising a tenon and respectively a groove of complementary dovetail cross-sectional configuration.

3. A joint according to Claim 2, for connecting two panels (1, 3) together in an L-like configuration, characterized in that it comprises an auxiliary strip (37) having a right-angled triangle cross-sectional configuration with two perpendicular faces which, in the assembled condition of said auxiliary strip (37), are coplanar with the related panel surfaces and with the third face formed with one male element (25) and one female element (24) adapted to engage in respective female and male elements of the strips associated with the panels.

4. A joint according to Claim 2, for connecting three panels (1, 2, 3) together in a T-like configuration, characterized in that it comprises an auxiliary strip (23) having a right-angled triangle cross-sectional configuration, wherein two faces are perpendicular to each other and have a male element (25) and respectively a female element (24) adapted to engage in respective female (22) and male (21) elements of the strips associated with the coplanar panels (1, 2), the third face (26) of the auxiliary strip (23), in the assembled condition thereof, extending in the same plane as the related surfaces of the aligned panels (1, 2).

5. A joint according to any of Claims 1 to 4, characterized in that in the strip heads holes (30) are formed for engagement with fastening screws of a plate (28) for locking said strips (4, 5, 6) mutually together.

6. A joint according to Claim 5, characterized in that it comprises a cover (31) for covering said plate (28), said cover (31) having a center shank (32) or pin adapted to engage, through an aperture (33) in said plate (28), into a channel (34) defined by bevels (35) on said strips (4, 5, 6), in the assembled condition thereof.

7. A joint according to Claim 1, characterized in that said strips (4, 5, 6) are formed with shanks or pins (15, 16) adapted to be pressure fitted into respective seats formed in the edges of said panels.

**Patentansprüche**

1. Verbindung zum Zusammensetzen von Platten (1, 2, 3), indem benachbarte Ränder (7, 8, 9) derselben miteinander in Eingriff gebracht werden, wobei den miteinander zu verbindenden Rändern (7, 8, 9) Verbindungsleisten (4, 5, 6) zugeordnet sind, von denen jede zwei konvergierende Seiten (11, 12) aufweist, um eine Eckkante zu bilden, und an den konvergierenden Seiten (11, 12) wenigstens ein Einsteckelement (21) bzw. wenigstens ein Aufnahmeelement (22) ausgebildet ist, die zueinander komplementär sind und sich parallel zu einem Rand erstrecken, dadurch gekennzeichnet, dass das Einsteckelement (21) und das Aufnahmeelement (22) hinterschneidend komplementär ausgebildet sind, so dass, wenn die Platten (1, 2, 3) miteinander verbunden werden, das Einsteckelement (21) einer Plattenleiste gleitend und verriegelnd in das Aufnahmeelement (22) einer benachbarten Plattenleiste eingreift.

2. Verbindung nach Anspruch 1 zum Zusammensetzen von Platten senkrecht zueinander, dadurch gekennzeichnet, dass die konvergierenden Seiten (11, 12) der Verbindungsleisten (4, 5, 6) einen Winkel von 90 Grad einschließen und ein Einsteckelement (21) bzw. ein Aufnahmeelement (22) besitzen, das aus einem Zapfen bzw. einer Nut mit komplementär schwalbenschwanzförmiger Querschnittsform besteht.

3. Verbindung nach Anspruch 2 zum Zusammensetzen von zwei Platten (1, 3) in L-förmiger Anordnung, dadurch gekennzeichnet, dass sie eine Hilfsleiste (37) mit rechtwinkelig-dreieckförmiger Querschnittsform mit zwei senkrecht zueinander verlaufenden Seiten, welche in angeordneten Zustand der Hilfsleiste (37) mit den betreffenden Plattenflächen komplanar sind, aufweist, wobei die dritte Seite mit einem Einsteckelement (25) und einem Aufnahmeelement (26) zum Eingriff in entsprechende Aufnahmeelemente bzw. Einsteckelemente auf den den Platten zugeordneten Leisten versehen ist.

4. Verbindung nach Anspruch 2, zum Zusammensetzen von drei Platten (1, 3) in T-förmiger Anordnung, dadurch gekennzeichnet, dass sie eine Hilfsleiste (23) mit rechtwinkelig-dreieckförmiger Querschnittsform aufweist, wobei zwei Seiten senkrecht zueinander verlaufen und ein Einsteckelement (25) bzw. ein Aufnahmeelement (26) für den Eingriff in entsprechende Aufnahmeelemente (22) bzw. Einsteckelemente (21) der den komplanaren Platten (1, 2) zugeordneten Leisten besitzen, und wobei die dritte Seite (26) der Hilfsleiste (23) sich in angeordnetem Zustand in derselben Ebene wie die betreffenden Flächen der fluchtenden Platten erstreckt.

5. Verbindung nach einem der Ansprüche 1 bis 4, dadurch gekennzeichnet, dass in den Stirnseiten der Leisten Löcher (30) für den Eingriff mit Befestigungsschrauben für eine Fixierplatte (28) zur gegenseitigen Blockierung der Leisten (4, 5, 6) ausgebildet sind.

6. Verbindung nach Anspruch 5, dadurch gekennzeichnet, dass sie eine Abdeckung (31) zum Abdecken der Fixierplatte (28) besitzt, welche Abdeckung (31) einen Mittelansatz (32) oder Stift besitzt, der durch eine Öffnung (33) in der genannten Platte (28) hindurch in einen Kanal (34) einsetzbar ist, der durch Abschrägungen (35) auf den Leisten (4, 5, 6) in zusammengesetzten Zustand derselben begrenzt ist.

7. Verbindung nach Anspruch 1, dadurch gekennzeichnet, dass die genannten Leisten (4, 5, 6) mit Zapfen oder Stiften (15, 16) für die Druckeinpassung in entsprechende, in den Rändern der Platten ausgebildete Sitze versehen sind.

**Revendications**

1. Dispositif de jonction pour l'assemblage de panneaux (1, 2, 3) par engagement mutuel de leurs bords adjacents (7, 8, 9), lesdits bords (7, 8, 9) à interconnecter étant associés à des barres de jonction (4, 5, 6) comportant chacune deux faces convergentes (11, 12) définissant un coin, au moins un élément mâle (21) et, respectivement, au moins un élément femelle (22), lesdits éléments étant complémentaires l'un de l'autre et s'étendant parallèlement à un bord, étant formés sur lesdites faces convergentes (11, 12), caractérisé en ce que lesdits éléments mâle et femelle (21, 22) ont des configurations entaillées complémentaires de sorte que, quand les panneaux (1, 2, 3) sont reliés ensemble, l'élément mâle (21) d'une barre de panneau engage, dans une relation de glissement et de verrouillage, l'élément femelle (22) d'une barre d'un panneau adjacent.

2. Dispositif selon la revendication 1, pour relier ensemble des panneaux (1, 2, 3) perpendiculairement l'un à l'autre, caractérisé en ce que les faces convergentes (11, 12) des barres de jonction (4, 5, 6) définissent un angle de 90° et possèdent un élément mâle (21) et, respectivement, un élément femelle (22) comprenant un tenon et, respectivement, une rainure de configurations de section transversale en queue-d'aronde complémentaires.

3. Dispositif selon la revendication 2, pour relier ensemble deux panneaux (1, 3) selon une configuration en forme de L, caractérisé en ce qu'il comprend une barre auxiliaire (37) ayant une configuration de section transversale en triangle rectangle avec deux faces perpendiculaires qui, dans la condition assemblée de ladite barre auxiliaire (37), sont coplanaires avec les surfaces de panneau correspondantes et dont la troisième face comporte un élément mâle (25) et un élément femelle (24) adaptés pour s'engager dans des éléments femelle et mâle respectifs des barres associées aux panneaux.

4. Dispositif selon la revendication 2, pour relier ensemble trois panneaux (1, 2, 3) selon une configuration en T, caractérisé en ce qu'il comprend une barre auxiliaire (23) ayant une configuration de section transversale en triangle rectangle, dans laquelle deux faces sont perpendiculaires l'une à l'autre et ont un élément mâle (25) et, respectivement, un élément femelle (24) adaptés pour s'engager dans des éléments femelle (22) et mâle (21) respectifs des barres associées aux panneaux coplanaires (1, 2), la troisième face (26) de la barre auxiliaire (23), dans sa condition assemblée, s'étendant dans le même plan que les surfaces correspondantes des panneaux alignés (1, 2).

5. Dispositif selon l'une quelconque des revendications 1 à 4, caractérisé en ce que, dans les têtes des barres, des trous (30) sont formés pour engagement avec des vis de fixation d'une plaque (28) pour verrouiller mutuellement ensemble lesdites barres (4, 5, 6).

6. Dispositif selon la revendication 5, caractérisé en ce qu'il comprend une coiffe (31) pour recouvrir ladite plaque (28), ladite coiffe (31) ayant une tige ou broche centrale (32) adaptée pour s'engager, à travers une ouverture (33) dans ladite plaque (28), dans un canal (34) défini par des chanfreins (35) sur lesdites barres (4, 5, 6), dans leur condition assemblée.

7. Dispositif selon la revendication 1, caractérisé en ce que lesdites barres (4, 5, 6) comportent des tiges ou broches (15, 16) adaptées pour être ajustées à pression dans des sièges respectifs formés dans les bords desdits panneaux.